Europäisches Patentamt

European Patent Office

Office européen des brevets

(19)

(11) Veröffentlichungsnummer: **0 224 223 B1**

(12) **EUROPÄISCHE PATENTSCHRIFT**

(45) Veröffentlichungstag der Patentschrift: **04.03.92**

(21) Anmeldenummer: **86116210.5**

(22) Anmeldetag: **22.11.86**

(51) Int. Cl.5: **B23P 19/06**

(54) **Vorrichtung zum Spannen von zu drehenden Körpern.**

(30) Priorität: **27.11.85 DE 3541922**

(43) Veröffentlichungstag der Anmeldung:
**03.06.87 Patentblatt 87/23**

(45) Bekanntmachung des Hinweises auf die
Patenterteilung:
**04.03.92 Patentblatt 92/10**

(84) Benannte Vertragsstaaten:
**AT FR GB IT NL**

(56) Entgegenhaltungen:
**US-A- 3 540 326**

(73) Patentinhaber: **Weatherford Products & Equipment GmbH
Hainhäuser Weg 150
W-3012 Langenhagen 1(DE)**

(72) Erfinder: **Pietras, Bernd Georg, Dipl.-Ing.
Sandriedeweg 12
W-3002 Wedemark 2(DE)**

(74) Vertreter: **Arendt, Helmut, Dipl.-Ing.
Patentanwalt Bergiusstrasse 2 c
W-3000 Hannover 51(DE)**

## Beschreibung

Die Erfindung betrifft eine Vorrichtung zum drehmomentabhängigen Einspannen eines Körpers zwischen Spannbacken einer den Körper um seine Längsachse drehenden Maschine, insbesondere Muffenaufschraubmaschine mit einem Schraubkopf zum Spannen und Aufschrauben der Muffe, und einer das Rohr fixierenden Konterzange zum Herstellen von Schraubverbindungen zwischen Rohren.

Für Verschraubgeräte in der Erdölindustrie, insbesondere für Muffenaufschraubmaschinen oder Verschraubungszangen werden Spannsysteme eingesetzt, die das Spanngut kraftschlüssig spannen und große Drehmomente übertragen. Mit steigender Teufe und damit höherer Belastung für die eingesetzten Erdölfeldrohre muß die Verschraubungsgüte von Muffe und Rohr verbessert werden. Die Verschraubungsgüte wird durch zwei Merkmale charakterisiert:

1. Erreichung einer optimalen Vorspannung in der Gewindeverbindung;
2. Geringe Beschädigungen am Rohr und an der Muffe beim Verschraubvorgang.

Zur Anzeige einer optimalen Vorspannung in der Gewindeverbindung dient das Verschraubmoment. Es kann aber nur dann als Hinweis auf eine qualitativ gute Verschraubung dienen, wenn die Muffe beim Verschrauben korrekt gespannt wurde. Werden Spannsysteme eingesetzt, welche die Rohrmuffe vor dem Verschraubbeginn mit maximaler Spannkraft spannen, so verformt sich die Muffe elastisch. Beim Aufschrauben auf das Rohr wird das theoretische Verschraubmoment in diesem Fall eher erreicht als die in der Gewindeverbindung aufgebaute notwendige Vorspannung. Bei drehmomentabhängigen Spannsystemen steigt die Spannkraft erst an, wenn das Rohrstück in die Muffe geschraubt wird. Dadurch wird einer größeren elastischen Verformung entgegengewirkt. Die mechanischen Spannsysteme lassen sich deshalb in zwei Hauptgruppen unterteilen:

1. Spannsysteme mit vom Drehmoment unabhängiger Spannkraft;
2. Spannsysteme mit vom Drehmoment abhängiger Spannkraft.

Die drehmomentabhängigen Spannsysteme sind zur Erreichung einer hohen Verschraubungsgüte von Vorteil.

Zur direkten Spannkrafteinleitung auf eine Muffe werden bei allen Spannsystemen Spannbacken (Spannkolben) mit gehärteten integrierten oder auswechselbaren Messern eingesetzt. Die Umfangskraft des antreibenden Drehmomentes wirkt bei allen Spannsystemen mit drehmomentabhängiger Spannkraft über Kurven oder in Verbindung mit Zahnrädern und Hebeln auf die Spannbacken ein und erzeugt die drehmomentabhängigen Spannkräfte.

Bei vielen Spannsystemen findet während des Spannvorganges zwischen Muffe und Spannbacken eine Relativbewegung statt, die zu starken Spannmarken an der Muffe führt. Die Rohroberfläche wirkt hierbei als Getriebeelement im Spannsystem.

Es sind sowohl Spannsysteme bekannt, die für jeden Muffendurchmesser gesonderte Spannbacken benötigen als auch Spannsysteme, die mit einer einzigen Ausrüstung an Spannmitteln Muffen mit geringfügig unterschiedlichen Durchmessern spannen können. Die bisher bekannten Spannsysteme arbeiten nur dann in beiden Drehrichtungen, wenn die Spannelemente gewechselt oder umgeschaltet werden. Die US-A- 3 540 326 beschreibt beispielsweise eine Einrichtung zum Spannen von Rohren und Muffen mit einem Kurvengetriebe. Um den Spanndurchmesser zu erreichen, der der gewünschten Relativlage der beiden Kurvenglieder entspricht, ist das Auswechseln der Spannbacken notwendig. Dadurch sind erhebliche Umrüstarbeiten erforderlich, verbunden mit einer groben Abstufung der Durchmesser.

Aufgabe der Erfindung ist es, eine Vorrichtung nach dem Gattungsbegriff des Anspruchs 1 so auszubilden, daß ohne Auswechslung der Spannbacken Muffen mit erheblich voneinander abweichenden Durchmessern eingespannt werden können. Außerdem soll das Spannen unabhängig von der Drehrichtung ohne Umschalten oder Wechseln von Bauteilen ermöglicht werden. Die Erfindung zur Lösung dieser Aufgabe zeichnet sich dadurch aus, daß die Spannbacken des Schraubkopfes zum Spannen und Aufschrauben der Muffe dieser über Schubkurbelantriebe mit einstellbarer Reichweite zugestellt werden, welche durch das die Rotationsbewegung des Schraubkopfes auslösende Drehmoment antreibbar sind.

Ohne eine Auswechslung von Spannbacken ist ein großer Spannbereich erfaßbar. Die mit dem Drehmoment steigende Spannkraft ist in ihrer maximalen Höhe einstellbar. Durch die Anpassung der Spannkraft können sowohl Muffen aus Kunststoff als auch Stahlmuffen gespannt werden. Durch ein von Relativbewegungen freies Aufsetzen der Spannbacken auf der Muffe werden diese nicht beschädigt. Die Spannbacken tragen gleichmäßig und erreichen hohe Standzeiten. Durch die im umgespannten Zustand erreichbare große Öffnung können die Muffen bequem zugeführt werden. Durch einen genauen Rundlauf werden pulsierende Massenkräfte vermieden. Ohne Umschalten oder Wechseln von Bauteilen ist die Spannfunktion unabhängig vom Rechts- oder Linkslauf.

Weitere den Erfindungsgegenstand vorteilhaft gestaltende Merkmale sind den Unteransprüchen zu entnehmen.

In der Zeichnung ist ein Ausführungsbeispiel der Erfindung schematisch dargestellt und nachstehend erläutert.

Es zeigen:

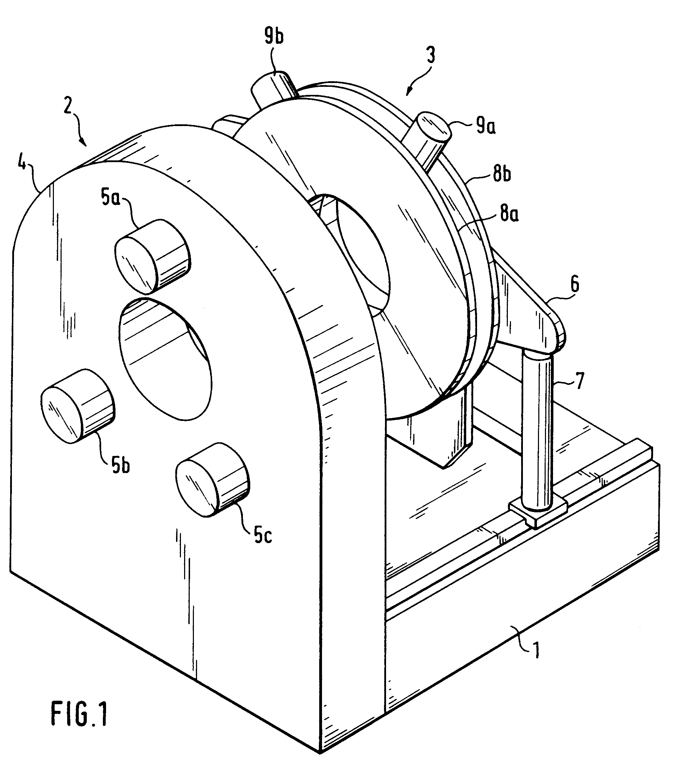

Fig. 1 die Gesamtansicht der Einrichtung in schaubildlicher Darstellung,

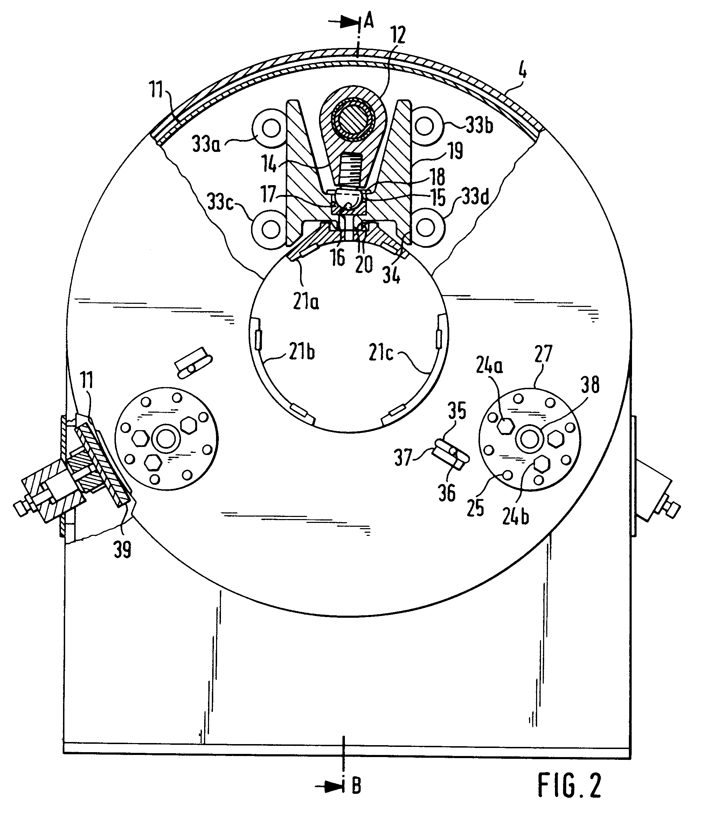

Fig. 2 die Seitenansicht des Muffenschraubkopfes z. T. im Schnitt,

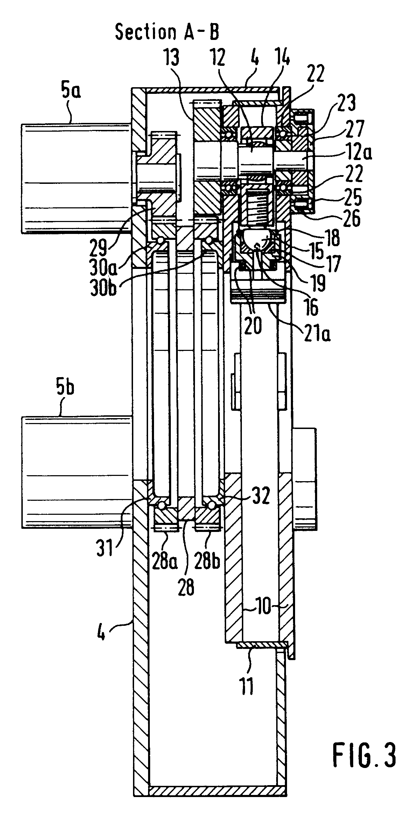

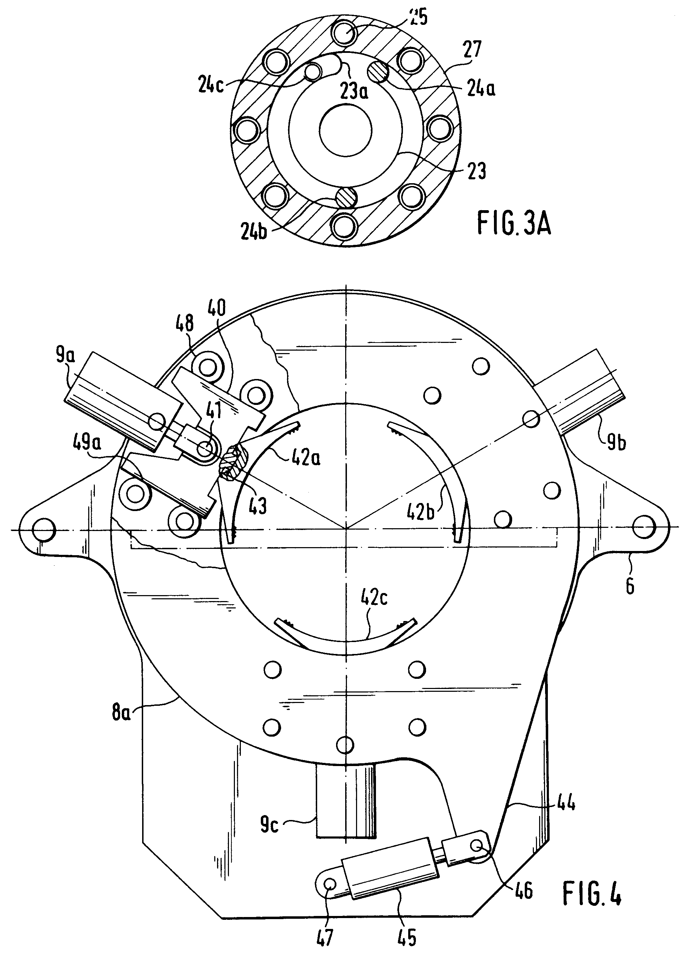

Fig. 3 einen Axialschnitt durch den Muffenschraubkopf gemäß Fig. 2,

Fig. 3a einen Schnitt durch die Vorrichtung zur Winkelbegrenzung für die Exzenterwelle,

Fig. 4 die Seitenansicht des Schraubkopfes der Konterzange, z. T. im Schnitt,

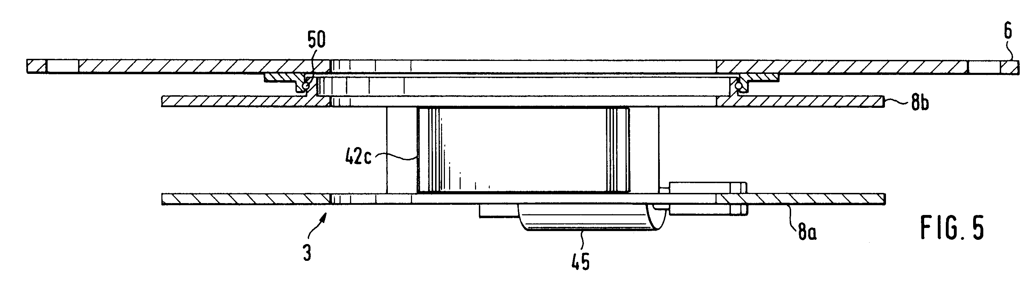

Fig. 5 einen Axialschnitt durch die Konterzange,

Fig. 6 einen vereinfachten Schaltplan für die Antriebssteuerung der hydraulischen Antriebsmotoren des Muffenschraubkopfes und

Fig. 7 eine vereinfachte Darstellung der Steuerung der Nachlaufeinrichtung des Schraubkopfes der Konterzange.

In den Figuren der Zeichnung sind den wesentlichsten Bauteilen folgende Bezugsziffern zugeordnet:

| 1 | Maschinengrundrahmen |
|---|---|
| 2 | Muffenspannvorrichtung |
| 3 | Konterzange |
| 4 | Gehäuse der Muffenspannvorrichtung 2 |
| 5 a-c | hydraulische Antriebsmotoren für den Muffenschraubkopf 10 in der Muffenspannvorrichtung 2 |
| 6 | Halteplatte des Spannkopfes der Konterzange 3 |
| 7 | Halteplattenstützen |
| 8a | Spannkopffrontplatte der Konterzange 3 |
| 8b | Spannkopfrückplatte der Konterzange 3 |
| 9 a-c | Spannzylinder der Konterzange |
| 10 | Muffenschraubkopf |
| 11 | Bremstrommel des Muffenschraubkopfes 10 |
| 12 | Exzenterwelle des Muffenschraubkopfes 10 |
| 12a | Exzenterwellenzapfen |
| 13 | Antriebsrad der Exzenterwelle (Planetenrad) |
| 14 | Spannbackenpleuel |
| 15 | Kugeldruckstück, in das Spannbackenpleuel 14 einschraubbar |
| 16 | Innensechskant des Kugeldruckstückes |
| 17 | Lagerpfanne für das Kugeldruckstück |
| 18 | Haltescheibe |
| 19 | Spannbackenführungsstück |
| 20 | Schräggelenklager der Spannbacken |
| 21 a-c | Spannbacken mit Greifmessern |
| 22 | Exzenterwellenlager |
| 23 | Mitnehmerscheibe |
| 23a | Mitnehmer |
| 24 a,b | Anschlagschrauben für den Mitnehmer 23a |
| 24c | Gewindebohrung für Anschlagschrauben 24a bzw. b |
| 25 | Befestigungsschrauben für Sicherungsscheibe 27 |
| 26 | Gummifeder |
| 27 | Sicherungsscheibe |
| 28 | Getrieberad (Sonnenrad) |
| 28 a,b | Verzahnungen des Getrieberades 28 |
| 29 | Antriebsritzel |
| 30 a,b | Wälzlager des Getrieberades 28 |
| 31 | ortsfester Tragring für das Getrieberad |
| 32 | Tragring für den Muffenschraubkopf |
| 33 a-d | Führungsrollen für das Spannbackenführungsstück |
| 34 | Gleitflächen der Führungsrollen 33 |
| 35 | Langloch im Gehäuse 4 |
| 36 | Anzeigestift |
| 37 | Anzeigeskala für Spannbackenstellung |
| 38 | Anzeigeskala für Exzenterwellenstellung |
| 39 | Schraubkopfbremse |
| 40 | Backenführungsstück der Konterzange |
| 41 | Gelenklager im Backenführungsstück 40 |
| 42 a-c | Spannbacken mit Greifmesser der Konterzange |
| 43 | Schräggelenklager der Spannbacken der Konterzange |
| 44 | Hebelarm des Konterzangenspannkopfes für den Nachlaufzylinder 45 |
| 45 | Nachlaufzylinder |
| 46 | Drehgelenkbolzen der Kolbenstange des Nachlaufzylinders |
| 47 | Drehgelenkbolzen des Nachlaufzylinders |
| 48 | Führungsrollen für das Backenführungsstück 40 zur Spannbackenführung der Konterzange |
| 49 | Gleitflächen der Führungsrollen 48 |
| 50 | Wälzlager des Konterzangenspannkopfes |
| 51 | Drucköllleitung für die Antriebsmotoren 5 a-c |
| 52 | Tankleitung für die Antriebsmoto- |

ren 5 a-c

| 53,54 | Drucköizuführleitungen für beide Drehrichtungen der Antriebsmotoren |
| 55 | Leckölleitung des Motors 5a |
| 56 | Leckölleitung der Motoren 5b und 5c |
| 57,58,59 | hydraulische Wegeventile |
| 60 | hydraulisches Druckminderventil |
| 61 | Druckölleitung für den Nachlaufzylinder 45 |
| 62 | Tankleitung für den Nachlaufzylinder 45 |
| 63 | hydraulisches Wegeventil für den Nachlaufzylinder 45 |
| 64 | Stromventil für den Nachlaufzylinder 45 |

Auf dem Maschinengrundrahmen 1 sind die Muffenspannvorrichtung 2 und die Konterzange 3 angeordnet. Sie bilden zusammen die Muffenaufschraubmaschine. Im Gehäuse 4 der Muffenspannvorrichtung sind drei hydraulische Antriebsmotoren 5a bis 5c gelagert, die den Muffenschraubkopf 10, bestückt mit Spannbacken 21a bis 21c zum Ausführen von Schraubbewegungen in Drehung versetzen können. Zum Spannen einer Rohrmuffe wird diese zunächst in die zentrale Spannöffnung des Muffenschraubkopfes geführt. Durch Inbetriebsetzung der hydraulischen Antriebsmotoren, ausgebildet als Axialkolbenmotoren, beginnen die Zahnritzel 29 das Getrieberad 28 mit den beiden Verzahnungen 28a und 28b in Drehung zu versetzen. Die Verzahnung 28b greift in die Antriebsräder 13 der Exzenterwellen 12. Durch die eine ständige Reibung auf die Bremstrommel 11 ausübende Bremse 39 können die Exzenterwellen 12 soweit gedreht werden, bis die Spannbacken 21a bis 21c die Rohrmuffe erfassen. Durch die Drehung der Exzenterwellen werden die Spannbackenpleuel 14 geschwenkt. Sie stellen damit die Spannbacken über die Kugeldruckstücke 15 der Muffenoberfläche zu. Sobald die in den Spannbacken gelagerten, nicht näher bezeichneten Greifmesser die Rohrmuffe erfaßt haben, wird der Drehwiderstand der Exzenterwellen so groß, daß der Reibungswiderstand zwischen der Bremstrommel 11 und dem Bremsbelag der Reibbremse 39 überwunden und der gesamte Muffenschraubkopf 10 mit den darin gelagerten Spannbacken, Exzenterwellen und allen übrigen Verbindungsteilen in Drehung versetzt wird. Die Antriebsräder 13 der Exzenterwellen umkreisen dabei die Verzahnung 28b des Getrieberades 28, d. h. sie bilden in diesem Getriebesystem Planetenräder, während das Getrieberad 28 das Sonnenrad bildet. Die Exzenterwellen 12 bilden mit den Spannbackenpleueln 14 und mit den Spannbackenführungsstücken 19 zentrische Schubkurbelgetriebe. Diese, die einzelnen Spannbacken 21 a-c radial antreibenden Schubkurbelgetriebe lassen sich also bei stillstehendem Muffenschraubkopf hin und herbewegen. Da die Drehmomentübertragung über die Antriebsräder 13 der Exzenterwellen geleitet wird, ist die Spannkraft vom aufgebrachten Drehmoment für den Muffenschraubkopf, d. h. vom Verschraubmoment abhängig.

Die Größe der Spannkraft wird vom Kurbelwinkel des vorstehend bezeichneten, aus Exzenterwelle, Spannbackenpleuel und Backenführungsstück bestehenden Schubkurbelgetriebes und vom Antriebsdrehmoment bestimmt. Die Spannkraft kann theoretisch unendlich groß werden, wenn das Pleuel 14 des Schubkurbelgetriebes in die Deck- oder Strecklage beim Spannen gebracht wird. Durch eine Drehung am Gewindedruckstück 15 kann die Pleuellänge verändert werden. Durch diese Verstellmöglichkeit können die Spannbacken stufenlos dem Muffendurchmesser angepaßt werden. Ferner kann der Kurbelwinkel am Schubkurbelgetriebe beim Spannen durch das Gewindedruckstück 15 beliebig eingestellt werden, d. h. die Spannkraft kann so dem Muffentyp angepaßt werden.

Bei einer Änderung der Antriebsdrehrichtung werden die Spannbacken gelöst und von der Muffe abgehoben, um dann nach dem Durchfahren des maximalen Hubs wieder zu spannen. Das Spannsystem kann so in Abhängigkeit von der Antriebsdrehrichtung Links- oder Rechtsdrehmomente übertragen.

Um zu verhindern, daß durch eine zu hohe Spannkraft die zu spannende Muffe beschädigt wird, ist ein Kurbelwinkelbegrenzer vorgesehen, der aus der Mitnehmerscheibe 23 mit dem Mitnehmer 23a besteht, der zwischen den Anschlagschrauben 24a und 24b hin- und hergeschwenkt werden kann. Dadurch ist es der Exzenterwelle verwehrt, eine Lage einzunehmen, die zu einer gestreckten Ausrichtung von Spannbackenpleuel 14 und Druckstück 15 und damit zu einer zu hohen Spannkraft führen würde. Die Mitnehmerscheibe 23 ist auf das Ende 12a der Exzenterwelle, die als Steckzapfen ausgebildet ist, aufgeschoben. Die Anschlagschrauben 24a und 24b können die Anschlagkraft auf eine Sicherungsscheibe 27 übertragen, welche durch Befestigungsschrauben 25 am Muffenschraubkopf 10 befestigt sind. Die Gummifedern 26 dienen zur Dämpfung der Anschlagenergie.

Der Winkelbegrenzer ist so einstellbar, daß entweder nur Rechts- oder nur Linksverschraubungen durchgeführt werden können und das Spannsystem beim Öffnen mit der größten Öffnungsweite stehenbleibt.

Da die Spannbacken über Schräggelenklager 20 mit ihren Führungsstücken 19 verbunden sind, erfolgt beim Spannen ein Einpendeln auf die Muffenoberfläche.

Die Konterzange 3 ist mit radial angeordneten Spannzylindern 9a bis 9c zum Spannen des Rohres, auf welches die Muffe aufgeschraubt werden soll, ausgerüstet. Um einwandfreie, radial gerichtete Spannkräfte auf das Rohr zu übertragen, sind die Spannbackenführungsstücke 40 mit den Kolbenstangen der Spannzylinder über Gelenklager 41 und auch mit den Spannbacken 42 über Schräggelenklager 43 gelenkig verbunden.

Beim Verschrauben von Schultergewinden steigt das Verschraubmoment in der letzten Verschraubphase, d. h. unmittelbar beim Erreichen der Schulteranlage sprunghaft an. Um ein genaues Verschraubmoment zu erzielen, muß der Verschraubantrieb sehr schnell abschalten. Die Verschraubungsgüte steigt, wenn das Verschraubmoment statisch länger auf die Gewindeverbindung einwirken kann. Hydraulische Verschraubmaschinen können ein erreichtes Drehmoment nicht statisch über einen Zeitraum halten, da die Haftreibung im Hydraulikantrieb wirksam wird. Durch eine Druckerhöhung kann die Haftreibung überwunden werden, wobei aber der Antrieb die Gewindeverbindung weiter verdreht, um erneut zum Stillstand zu kommen. Um diese Nachteile zu beseitigen, ist die Konterzange mit einer Nachlaufeinrichtung versehen, die aus einem hydraulischen Zylinder 45 besteht, der gelenkig an einen Hebelarm 44 der Spannkopffrontplatte 8a angreift. Die Nachlaufeinrichtung kann auf drei verschiedene Arten betrieben werden, wobei die Nachlaufgeschwindigkeit an dem Stromventil 64 der Nachlaufhydraulik einstellbar ist:

Fall I: Die Winkelgeschwindigkeit des Schraubkopfes der Konterzange ist gleich der Nachlaufwinkelgeschwindigkeit.

Beim Einschalten der Nachlaufeinrichtung ist die Relativgeschwindigkeit zwischen den Gewindeschultern der zu verschraubenden Teile Null. Das Drehmoment kann während der Nachlaufzeit gehalten werden. Die Haltezeit ist abhängig vom Nachlaufwinkel und von der Verschraubdrehzahl.

Fall II: Die Winkelgeschwindigkeit des Schraubkopfes ist größer als die Nachlaufwinkelgeschwindigkeit.

Wird in dieser Einstellung die Nachlaufeinrichtung eingeschaltet, so verringert sich die Relativwinkelgeschwindigkeit zwischen den Gewindeschultern. Das Drehmoment steigt langsamer an, wodurch Zeit zum Abschalten des Schraubantriebes gewonnen wird.

Fall III: Die Winkelgeschwindigkeit des Schraubkopfes ist kleiner als die Nachlaufwinkelgeschwindigkeit.

Bei dieser Einstellung kann eine Drehmomentschnellabschaltung durchgeführt werden. Beim Einschalten der Nachlaufeinrichtung sinkt das Drehmoment sehr schnell solange, bis der maximale Nachlaufwinkel erreicht wird. Während des Nachlaufens ist genügend Zeit vorhanden, den Schraubantrieb abzuschalten. Diese Schnellabschaltung ist unabhängig von Massenkräften des Schraubantriebes.

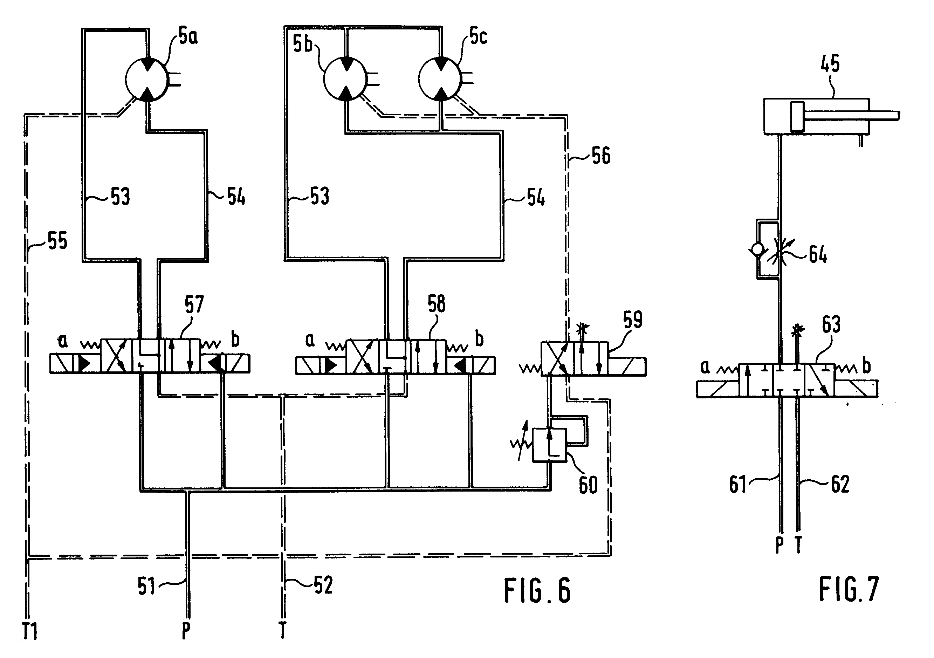

Zur Aktivierung der Nachlaufeinrichtung wird der Nachlaufzylinder durch Bewegen des 4/3 Wegeventils 63 in die Schaltstellung a ausgefahren (Fig. 6). Wird das eingestellte Drehmoment in der Gewindeverbindung erreicht, d. h. wenn bei Schulterverbindungen die Gewindeschultern zur Anlage kommen oder kurz davor sind, so wird das Wegeventil 63 in die Schaltstellung b gebracht. Da die Umfangskraft des aufgebrachten Drehmomentes auf den Nachlaufzylinder einwirkt, fährt der Nachlaufzylinderkolben ein und überwindet dabei den durch das Stromventil 64 erzeugten Widerstand. Dadurch kann der sehr steile Drehmomentanstieg verringert werden oder sogar ein konstantes Drehmoment ohne Anstieg gehalten werden. In diesem Fall sind die Schraubkopfgeschwindigkeit und die Nachlaufgeschwindigkeit gleich. Die Einfahrgeschwindigkeit kann durch das Stromventil 64 eingestellt werden, da das Zylinderöl das Stromventil passieren muß.

Wird die Nachlaufeinrichtung aktiviert, wenn der Muffenschraubkopf und der Schraubkopf der Konterzange in Ruhestellung sind, also die Gewindeverbindung gespannt gehalten wird, so kann der Nachlaufzylinder die fest verschraubten Gewindeverbindungen lösen (brechen).

Bei dem gezeigten Beispiel werden die Antriebsmotoren (Axialkolbenmotoren) 5a bis 5c von einer gemeinsamen Druckquelle über die Druckölzuführleitungen 51, 53, und 54 gespeist. Die drei Wegeventile 57, 58 und 59 und ein Druckreduzierventil 60 sorgen für die Ansteuerung der Motoren. In der gezeichneten Schaltstellung (Fig. 6) stehen die Antriebsmotoren still, da die Arbeitsleitungen- (Druckölzuführleitungen 53, 54)mit der Tankleitung 52 verbunden sind. Die Motoren 5b und 5c werden mit einem Druck von 1 bar durch das Druckminderventil 60 und das 4/2 Wegeventil 59 über die Lecköileitung 56 im Gehäuse mit Druck beaufschlagt. Der Gehäusedruck bewirkt in Verbindung mit dem Kurzschließen der zu den Motoren 5b und 5c führenden Arbeitsleitungen 53 und 54 eine Freilaufschaltung. Wird in diesem Fall das Ventil 57 in die Stellung a oder b geschaltet, so dreht der Motor 5a links- oder rechtsherum. Dabei fließt das gesamte Öl der Druckquelle P nur durch den Motor 5a. Damit kann der Schraubkopf eine hohe Drehzahl bei kleinem Drehmoment erreichen.

Wird das Ventil 59 gleichzeitig mit den Ventilen 57 und 58 so betätigt, daß alle Motoren von der Druckquelle P gespeist werden, erreicht der Schraubkopf eine geringere Drehzahl, jedoch ein sehr hohes Drehmoment.

Durch die beiden Schaltmöglichkeiten a bzw. b der Ventile 57 und 58 können die Motoren rechts- oder linksherum geschaltet werden.

**Patentansprüche**

1. Vorrichtung zum drehmomentabhängigen Einspannen eines Körpers zwischen Spannbacken (21 a-c) einer den Körper um seine Längsachse drehenden Maschine, insbesondere Muffenaufschraubmaschine mit einem Schraubkopf (10) zum Spannen und Aufschrauben der Muffe, und einer das Rohr fixierenden Konterzange (3) zum Herstellen von Schraubverbindungen zwischen Rohren, dadurch gekennzeichnet, daß die Spannbacken (21 a-c) dem zu spannenden Körper über Schubkurbelantriebe mit einstellbarer Reichweite zugestellt werden, wobei die Schubkurbelantriebe durch das die Rotationsbewegung des zu drehenden Körpers auslösende Drehmoment antreibbar sind.

2. Einrichtung nach Anspruch 1, dadurch gekennzeichnet, daß die Spannbacken (42 a-c) der Konterzange (3) in einem um die Rohrlängsachse begrenzt drehbaren Schraubkopf angeordnet sind, dessen Drehbewegung durch eine ein Reaktionsmoment erzeugende Nachlaufvorrichtung (45) ausschaltbar ist.

3. Einrichtung nach Anspruch 2, dadurch gekennzeichnet, daß die Größe des Reaktionsmomentes veränderbar ist.

4. Einrichtung nach den Ansprüchen 2 oder 3, dadurch gekennzeichnet, daß die das Reaktionsmoment erzeugende Nachlaufvorrichtung ein ortsfest angeordneter hydraulischer Stellzylinder (45) ist.

5. Einrichtung nach einem der Ansprüche 2 bis 4, dadurch gekennzeichnet, daß der Schraubkopf (3) der Konterzange mit dem hydraulischen Stellzylinder (45) Bauglieder eines Getriebes aus der Schubkurbelkette sind.

6. Einrichtung nach einem oder mehreren der Ansprüche 1 bis 5, dadurch gekennzeichnet, daß die Schubkurbelantriebe der Spannbacken (21 a-c) der Muffenspannvorrichtung (2) jeweils aus einer Exzenterwelle (12) und einem Pleuel (14) mit einem Gewindedruckstück (15) bestehen.

7. Einrichtung nach einem oder mehreren der Ansprüche 1 bis 6, dadurch gekennzeichnet, daß die Spannbacken (21 a-c) über Schräggelenklager (20) mit zwischen Rollen (33 a-d) geführten Spannbackenführungsstücken (19) verbunden und diese gelenkig an den Gewindedruckstücken (15) befestigt sind.

8. Einrichtung nach einem oder mehreren der Ansprüche 1 bis 7, dadurch gekennzeichnet, daß das Verbindungsgelenk zwischen einem Gewindedruckstück (15) und einem Spannbackenführungsstück (19) aus einem kugelförmig gewölbten Kopfende des Gewindedruckstücks und einer Gelenkpfanne (17) in dem Spannbackenführungsstück (19) besteht.

9. Einrichtung nach einem oder mehreren der Ansprüche 1 bis 8, dadurch gekennzeichnet, daß die Exzenterwelle (12) zum Antrieb mit einem Zahnrad (13) ausgerüstet ist, welches mit dem Getrieberad (28) der Muffenspannvorrichtung kämmt.

10. Einrichtung nach einem oder mehreren der Ansprüche 1 bis 9, dadurch gekennzeichnet, daß das Getriebe des Muffenschraubkopfes als Planetengetriebe mit den Zahnrädern (13) der Exzenterwellen als Planetenräder und mit dem Schraubkopf (10) als Planetenträger ausgebildet ist.

11. Einrichtung nach einem oder mehreren der Ansprüche 1 bis 10, dadurch gekennzeichnet, daß das kugelförmige Kopfende des Gewindedruckstücks (15) zur radialen Verstellung mit einer Stecköffnung (16) mit Innensechskant versehen ist.

12. Einrichtung nach einem oder mehreren der Ansprüche 1 bis 11, dadurch gekennzeichnet, daß das dem Exzenterwellenzahnkranz (13) gegenüberliegende Ende der Exzenterwelle (12) als zapfenförmiges, aus dem Schraubkopf (10) hervorstehendes Endstück zur Aufnahme eines Drehwinkelbegrenzers ausgebildet ist.

13. Einrichtung nach Anspruch 12, dadurch gekennzeichnet, daß der Drehwinkelbegrenzer aus einer Mitnehmerscheibe (23) mit einem radial vorstehenden Mitnehmer (23a) besteht, welcher zwischen versetzbaren Anschlagschrauben (24a, 24b) schwenkbar ist.

14. Einrichtung nach den Ansprüchen 12 oder 13, dadurch gekennzeichnet, daß der Drehwinkelbegrenzer zur Winkelverstellung von dem Exzenterwellenende ab- und um einige Winkelgrade versetzt wieder aufschiebbar ist.

15. Einrichtung nach einem oder mehreren der Ansprüche 12 bis 14, dadurch gekennzeichnet, daß die Anschlagschrauben (24a, 24b) in einer Sicherungsscheibe (27) angeordnet sind, welche über Dämpfungselemente (26) am Schraubkopf (10) befestigt ist.

16. Einrichtung nach einem oder mehreren der Ansprüche 1 bis 15, dadurch gekennzeichnet, daß der Schraubkopf (10) während der Zustellung der Spannbacken (21a-21c) bis zur Anlage an die Muffenoberfläche durch eine Bremse (39) feststellbar ist.

17. Einrichtung nach einem oder mehreren der Ansprüche 1 bis 16, dadurch gekennzeichnet, daß in die Hydraulikleitung der Nachlaufeinrichtung (45) ein Stromventil (64) mit veränderbarem Querschnitt eingesetzt ist.

18. Einrichtung nach einem oder mehreren der Ansprüche 1 bis 17, dadurch gekennzeichnet, daß die Muffenspannvorrichtung (2) von einem Gehäuse (4) umgeben ist, auf dessen Umfang verteilt mehrere hydraulische Antriebsmotoren (5 a-c) mit Zahnritzeln (29) angeordnet sind, welche in ein im Gehäuse gelagertes Getrieberad (Sonnenrad) (28) greifen.

19. Einrichtung nach Anspruch 18, dadurch gekennzeichnet, daß das Getrieberad (28) mit einem Doppelzahnkranz (28a, 28b) versehen ist.

20. Einrichtung nach einem oder mehreren der Ansprüche 1 bis 19, dadurch gekennzeichnet, daß die Hydraulikmotoren (5 a-c) von einer gemeinsamen Druckquelle P gespeiste Axialkolbenmotoren sind, für deren Ansteuerung drei Wegeventile (57, 58, 59) und ein Druckreduzierventil (60) eingesetzt sind, wobei zwei Motoren paarweise zusammengefaßt sind und deren Leckölleitungen (56) über eines der Wege- und das Druckreduzierventil (60) mit der Druckquelle verbindbar sind.

## Claims

1. A device for the torque-dependent clamping of a body between clamping jaws (21a-c) of a machine, more particularly a socket screwing-on machine, rotating around its longitudinal axis, the device having a screw head (10) for clamping and screwing-on of the socket, and back-up tongs (3) fixing the pipe for the making of screwed connections between pipes, characterized in that the clamping jaws (21a-c) are applied to the body to be clamped via thrust crank drives of adjustable range, the thrust crank drives being drivable via the torque triggering the rotary movement of the body to be rotated.

2. A device according to Claim 1, characterized in that the clamping jaws (42a-c) of the back-up tongs (3) are disposed in a screw head which can rotate to a limited extent around the longitudinal axis of the pipe and whose rotary movement can be terminated by a follow-up device (45) generating a reaction force.

3. A device according to Claim 2, characterized in that the magnitude of the reaction force can be altered.

4. A device according to Claims 2 or 3, characterized in that the follow-up device generating the reaction force is a rigidly disposed hydraulic adjusting cylinder (45).

5. A device according to one of Claims 2 to 4, characterized in that the screw head (3) of the back-up tongs together with the hydraulic adjusting cylinder (45) are constructional members of a transmission from the thrust crank chain.

6. A device according to one or more of Claims 1 to 5, characterized in that the thrust crank drives of the clamping jaws (21a-c) of the socket-clamping device (2) each comprise an eccentric shaft (12) and a connecting rod (14) with a screwthreaded thrust member (15).

7. A device according to one or more of Claims 1 to 6, characterized in that the clamping jaws (21a-c) are connected via inclined ball-and-socket joints (20) to clamping jaw guide members (19) guided between rollers (33a-d), the clamping jaw guide members being pivotably attached to the screwthreaded thrust members (15).

8. A device according to one or more of Claims 1 to 7, characterized in that the connecting link between a screwthreaded thrust member (15) and a clamping jaw guide member (19) consists of a spherically arched head end of the screwthreaded thrust member and a joint socket (17) in the clamping jaws guide member (19).

9. A device according to one or more of Claims 1 to 8, characterized in that the eccentric shaft (12) for the drive has a gear wheel (13) which meshes with the gear wheel (28) of the socket clamping device.

10. A device according to one or more of Claims 1 to 9, characterized in that the transmission of the socket screw head takes the form of a planetary transmission in which the gear wheels (13) of the eccentric shafts are the planet pinions and the screw head (10) is the planet carrier.

11. A device according to one or more of Claims 1 to 10, characterized in that for radial adjustment the spherical head end of the screw headed thrust member (15) has a plug-in aperture (16) with a hexagonal recess.

12. A device according to one or more of Claims 1 to 11, characterized in that the end of the eccentric shaft (12) opposite the eccentric shaft toothed rim (13) takes the form of a pin-shaped end member projecting from the screw head (10) to receive a rotary angle limiter.

13. A device according to Claim 12, characterized in that the rotary angle limiter comprises an entraining disc (23) having a radially projecting entraining element (23a) which can be pivoted between offsettable stop screws (24a, 24b).

14. A device according to Claim 12 or 13, characterized in that the rotary angle limiter for angular adjustment can be slipped off the end of the eccentric shaft and slipped on to said end offset by a number of degrees of angle.

15. A device according to one or more of Claims 12 to 14, characterized in that the stop screws (24a, 24b) are disposed in a securing disc (27) attached via damping elements (26) to the screw head (10).

16. A device according to one or more of Claims 1 to 15, characterized in that the feed of the clamping jaws (21a-21c) of the screw head (10) can be facilitated by brake (39) up to abutment with the socket surface.

17. A device according to one or more of Claims 1 to 16, characterized in that a flow valve (64) of variable cross-section is inserted in the hydraulic line of the follow-up device (45).

18. A device according to one or more of Claims 1 to 18, characterized in that the socket clamping device (2) is enclosed by a casing (4) having disposed distributed over its periphery a number of hydraulic driving motors (5a-c) pinions (29) which engage a gear wheel (sun wheel) (28) mounted in the casing.

19. A device according to Claim 18, characterized in that the gearwheel (28) has a double toothed rim(28a, 28b).

20. A device according to one or more of Claims 1 to 19, characterized in that the hydraulic motors (5a-c) are axial piston motors which are supplied from a common pressure source (P) and for whose operation three distributing valves (57, 58, 59) and a pressure-reducing valve (60) are used, two motors being combined in parallel and their leakage oil lines (56) being connectable via one of the distributing valves and the pressure-reducing valve (60) to the pressure source.

**Revendications**

1. Dispositif de serrage en fonction du couple, d'un corps entre des mâchoires (21a-c) d'une machine entraînant en rotation le corps autour de son axe longitudinal, notamment machine de vissage à manchon, avec une tête de vissage (10) pour le serrage et une pince de blocage (3) immobilisant le tube pour la réalisation d'un raccordement par vissage entre tubes, caractérisé en ce que les mâchoires de serrage (21a-c) sont associés au corps à serrer par l'intermédiaire de mécanismes bielles-manivelles ayant une portée réglable, les mécanismes bielles-manivelles étant susceptibles d'être entraînés par le couple déclenchant le mouvement rotatif du corps à entraîner en rotation.

2. Installation selon la revendication 1, caractérisée en ce que les mâchoires de serrage (42a-c) de la pince de blocage (3) sont disposées dans une tête de vissage qui est rotative autour de l'axe du tube longitudinal, de façon limitée et dont le mouvement de rotation peut être mis hors service par un dispositif de poursuite (45) produisant un couple de réaction.

3. Installation selon la revendication 2, caractérisée en ce que la valeur du couple de réaction est variable.

4. Installation selon les revendications 2 ou 3, caractérisée en ce que le dispositif de poursuite produisant le couple de réaction est un vérin de réglage (45) monté stationnaire.

5. Installation selon l'une des revendications 2 à 4, caractérisée en ce que la tête de vissage (3) de la pince de blocage avec le vérin de réglage hydraulique (45) sont des éléments de construction d'un engrenage de la chaîne de bielles-manivelles.

**6.** Installation selon l'une ou plusieurs des revendications 1 à 5, caractérisée en ce que les mécanismes bielles-manivelles des mâchoires de serrage (21a-c) du dispositif de serrage à manchon (2) se composent respectivement d'un arbre excentrique (12) et d'une bielle (14) avec une pièce de pression filetée (15).

**7.** Installation selon l'une ou plusieurs des revendications 1 à 6, caractérisée en ce que les mâchoires de serrage (21a-c) sont reliées par un joint d'articulation incliné (20) avec des pièces de guidage de mâchoire de serrage (19) guidées entre des rouleaux (33a-d) et que celles-ci sont articulées aux pièces de pression filetées (15).

**8.** Installation selon l'une ou plusieurs des revendications 1 à 7, caractérisée en ce que l'articulation de liaison entre la pièce de pression filetée (15) et une pièce de guidage de mâchoire de serrage (19) est formée par une extrémité de tête bombée en forme d'une sphère de la pièce de pression filetée et par une cavité articulaire (17) dans une pièce de guidage de mâchoire à serrage (19).

**9.** Installation selon l'une ou plusieurs des revendications 1 à 8, caractérisée en ce que l'arbre excentrique (12) pour l'entraînement est équipé d'un pignon (13) qui engrène une roue d'engrenage (28) du dispositif de serrage à manchon.

**10.** Installation selon l'une ou plusieurs des revendications 1 à 9, caractérisée en ce que l'engrenage de la tête de vissage à manchon est réalisée sous forme d'un engrenage planétaire avec les pignons (13) des arbres excentriques formant les roues planétaires et la tête de vissage (10) formant le support planétaire.

**11.** Installation selon l'une ou plusieurs des revendications 1 à 10, caractérisée en ce que l'extrémité de tête de forme sphérique de la pièce de pression filetée (15) pour le réglage radial est pourvu d'une ouverture d'emmanchement (16) à six pans creux.

**12.** Installation selon l'une ou plusieurs des revendications 1 à 11, caractérisée en ce que l'extrémité de l'arbre excentrique 12, qui est opposé à la couronne dentée d'arbre excentrique (13) est réalisée sous forme d'une pièce d'extrémité en forme d'un tenon et faisant saillie de la tête de vissage (10) pour la réception d'un élément de limitation de l'angle de rotation.

**13.** Installation selon la revendication 12, caractérisée en ce que l'élément de limitation d'angle de rotation est formé par un disque d'entraînement (23) pourvu d'un élément d'entraînement (23a) faisant radialement saillie et qui est susceptible de pivoter entre deux vis de butée réglables (24a, 24b).

**14.** Installation selon les revendications 12 ou 13, caractérisée en ce que l'élément de limitation d'angle de rotation est susceptible d'être retiré de l'extrémité d'arbre excentrique et d'être à nouveau emmanché, avec un décalage de quelques degrés d'angle, pour un décalage angulaire.

**15.** Installation selon l'une ou plusieurs des revendications 12 à 14, caractérisée en ce que les vis de butée (24a, 24b) sont disposées dans un disque de sécurité (27) qui est fixé à la tête de vissage (10) par l'intermédiaire d'éléments amortisseurs (26).

**16.** Installation selon l'une ou plusieurs des revendications 1 à 15, caractérisée en ce que la tête de vissage (10) est arrêtable par un frein (39) pendant la fermeture des mâchoires de serrage (21a-21c) jusqu'à l'application à la surface de manchon.

**17.** Installation selon l'une ou plusieurs des revendications 1 à 16, caractérisée en ce qu'une soupape d'écoulement (64) à section transversale variable est placée dans le conduit hydraulique du dispositif de poursuite (45).

**18.** Installation selon l'une ou plusieurs des revendications 1 à 17, caractérisée en ce que le dispositif de serrage à manchon (2) est entouré d'un boîtier (4) sur la périphérie duquel sont disposés plusieurs moteurs d'entraînement hydraulique (5a-c) ayant des pignons (29) s'engageant dans une roue d'engrenage (roue soleil) (28) logée dans le boîtier.

**19.** Installation selon la revendication 18, caractérisée en ce que la roue d'engrenage (28) est pourvue d'une double couronne dentée (28a, 28b).

**20.** Installation selon l'une ou plusieurs des revendications 1 à 19, caractérisée en ce que les moteurs hydrauliques (5a-c) sont des moteurs à pistons axiaux alimentés à partir d'une source de pression commune P et pour la commande desquels sont utilisées trois soupapes à plusieurs voies (57, 58, 59) et une soupape de réduction de pression (60), deux moteurs étant réunis par paire et les conduits d'huile de fuite (56) de ceux-ci pouvant être reliés à la source de pression par l'intermédiaire d'une des soupapes à plusieurs voies et de la soupape de réduction de pression (60).

FIG.1

FIG. 2

Section A-B

FIG.3

FIG.3A

FIG.4

6

8b

8a

FIG. 5

45

42c

3

50

FIG.6

FIG.7